(19) Europäisches Patentamt

European Patent Office

Office européen des brevets

(11) **EP 1 384 410 A1**

(12) **EUROPEAN PATENT APPLICATION**

(43) Date of publication:
28.01.2004 Bulletin 2004/05

(51) Int Cl.[7]: **A23K 1/18**, A23K 1/16

(21) Application number: 02016807.6

(22) Date of filing: 26.07.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **Itochu Feed Mills Co., Ltd**
**Tokyo 136-8511 (JP)**

(72) Inventors:
• **Takahashi, Yoshinori**
**Kuroiso-shi, Tochigi 325-0103 (JP)**
• **Miura, Hiroshi**
**Kuroiso-shi, Tochigi 325-0103 (JP)**
• **Iwasaki, Kazuya, Minami-Kyushu Branch Office**
**Kagoshima-shi, Kagoshima 891-0122 (JP)**
• **Suzuki, Tamotsu**
**Kuroiso-shi, Tochigi 325-0103 (JP)**

(74) Representative: **Albrecht, Thomas, Dr.**
**Kraus & Weisert**
**Patent- und Rechtsanwälte**
**Thomas-Wimmer-Ring 15**
**80539 München (DE)**

(54) **A glycine-enriched vegetable compound feed for a broiler chicken**

(57) There is disclosed herein a glycine-enriched vegetable compound feed for a broiler chicken which causes an effect to suppress or prevent the occurrence of loose passage.

According to the present invention, there is provided a glycine enriched vegetable compound feed for a broider chicken which comprises incorporated glycine into a vegetable compound feed in the range of 0.05-0.3 % by weight based on the feed.

EP 1 384 410 A1

**Description**

The present invention relates to a feed for preventing the aggravation of chicken house environment and the lowering in the productivity caused by broiler chicken suffering from loose passage.

Prior Art

In general, when a broiler chicken suffers from symptom of loose passage, it is susceptive to various bad influences. Under such circumstance, the floor surface material consisting of a rice hull becomes wet to cause the aggravation of the chicken house environment. In this connection, it becomes hard upon drying thereby causing the increase in the occurrence rate of chicken with weak legs and of disease inducing the formation of callosity in the breast of the chicken and so on. Also, since such fowl droppings are hard to treat because of their high water content and hence much labor is required for the treatment. When especially a vegetable compound feed is fed to a broiler chicken, there occurs a phenomenon that the chicken tends to suffer from loose passage.

As an appropriate means to prevent the occurrence of loose passage, adjustment of mineral balance has been taken. In case of feed wherein the sodium content is excessive, the amount of drinking water is increased thereby causing the occurrence of loose passage. In case of complete vegetable protein raw material containing especially soybean meal, since it contains a large amount of potassium, the occurrence of loose passage has been considered to be due to the excess of monovalent cation and as the countermeasure are reported the reduction in the sodium content in the feed, the neutralization effect by conversion of sodium into sodium bicarbonate, etc.

Furthermore, recently the use of a complete vegetable protein raw material is increased for the safety of the feed raw material from sanitary aspect and the preparation of value added livestock products originated in the feed raw material. The use of the complete vegetable protein raw material is considered to be one of factors of causing the increase in the occurrence of the broiler chicken's loose passage.

The complete vegetable feed which consists essentially vegetable raw material and which contains no animal raw material meets the nutrition requirement for a broiler chicken according to Japanese Feeding Standard like an animal protein compound feed and it has no nutritional problem. However, it is practical situation that sufficient effect to prevent the lowering of the productivity and the aggravation of chicken house environment could not have been achieved yet by the hitherto taken countermeasures toward the broiler chicken's loose passage.

SUMMARY OF THE INVENTION

An object of the present invention is to provide an improved vegetable compound feed for a broiler chicken for suppressing or preventing the occurrence of the loose passage as often encountered when a vegetable compound feed was fed to the broiler chicken.

The present inventors has attempted to make two kinds of feed formulations with animal and vegetable raw materials, one feed formulation consisting essentially of vegetable raw material (complete vegetable feed) and the other feed formulation being an animal protein compound feed, there being no appreciable difference in the crude protein content, other ingredient content and the metabolizable energy value between these two feeds. The results of inspection of these two feeds for the amino acid composition are shown in table 1 in Experimental Example as described later. Table 1 reveals that there is an appreciable difference in the glycine content between these two feeds and that the glycine content in the complete vegetable feed is about 0.3 % by weight less than that in the animal protein compound feed. Glycine is a kind of glycogenic amino acid and an essential ingredient for the formation of the final excreta uric acid in a chicken but it is a non-essential amino acid for the chicken' growth.

The present inventors have found that when glycine is supplemented to a complete vegetable feed for a broiler chicken for the purpose of increasing glycine intake, effect of suppressing the occurrence of loose passage may be achieved. The present invention was completed based on this finding.

That is, the present invention is a glycine-enriched vegetable compound feed for a broiler chicken which comprises incorporated glycine into a vegetable compound feed in the range of 0.05-0.3 % by weight based on the feed.

Also, the present invention is a feed additive comprising glycine as the main ingredient for preparing the glycine-enriched vegetable compound feed for a broiler chicken.

The present invention relates to a method for feeding a broider chicken which comprises feeding a broider chicken with a glycine-enriched vegetable compound feed thereby causing an effect to suppress or prevent the occurrence of loose passage.

DATAILED EXPLANATION OF THE PREFERRED EMBODIMENTS

The feed for a broiler chicken in the present invention is one wherein all the protein source and metabolic energy source are limited to vegetable raw materials and glycine contained in the feed is enriched to the range of 0.05-0.3 % by weight higher than originally contained in the feed.

The other components of the feed may be the same as the conventional feed for broiler chicken and include a protein source, an energy source, a calcium source, a magnesium source, a phosphorus source, vitamins, minerals and the like and may be blended in such amount as to meet the requirements of NRC and Japanese Feeding Standard. As a vegetable raw material, there may be selected from the among cereals such as corn, wheat, barley and milo; bran, wheat bran, rice bran, defatted rice bran, soybean meal, rapeseed meal, coconut meal, and linseed meal. It is necessary to incorporate a calcium source, a magnesium source, a phosphorus source, vitamins, minerals and the like into the feed like the conventional feed. The feed contains 17-23 % by weight of crude protein (CP), 0.8-1.1 % by weight of calcium, 0.1-0.2 % by weight of magnesium, 0.35-0.55 % by weight of non-phytin phosphorus (e.g. tricalcium phosphate, dicalcium phosphate) and about 3000-3300 kcal/kg of metabolizable energy (ME).

When the feed was prepared using the vegetable raw materials as above-stated which meets the nutrition requirement of Japanese Feeding Standard, then the content of glycine in the feed is about 1.0 % by weight. According to the present invention, glycine is further added in 0.05-0.3 % by weight of the feed. It is not necessary to adapt the total content of glycine in the feed to that in the animal protein compound feed. Even when it is less than the animal protein compound feed, the effect of suppressing and preventing the occurrence of the loose passage may be exerted. Glycine is added to the vegetable compound feed in 0.05-0.3 % by weight, preferably 0.1-0.2 % by weight based on the feed and mixed together. When the amount added of glycine is less than 0.05 % by weight, the effect to suppress or prevent the occurrence of the loose passage is not sufficient. On the other hand, when it exceeds 0.3 % by weight, the effect is sufficient but the extent of the effect is not so much relative to the amount added of glycine and it is not advantageous from the economical aspect.

Although the mechanism regarding the effect of suppressing or preventing the occurrence of the loose passage by the glycine-enriched vegetable compound feed has not been identified yet, it is considered to be due to the improvement in the glycine deficiency during the uric acid nitrogen excretion in the broiler chicken fed with the complete vegetable feed.

By feeding the broiler chicken with the glycine-enriched vegetable compound feed, there may be achieved the effect of suppressing or preventing the occurrence of loose passage that is comparable to that achieved by feeding the broiler chicken with the animal protein compound feed.

According to the present invention there is also provided an additive for the vegetable compound feed for preventing the occurrence of broiler chicken's loose passage which comprises glycine alone or in combination with other feed additive in addition to the glycine-enriched vegetable compound feed.

The following Examples illustrate the present invention more specifically but the present invention is not restricted thereto.

EXAMPLES

Experimental Example

Test method: Cobb species 9 male and 9 female broiler chickens of 21 days old (a total of 18 birds) were used in each group of two replicates and reared for 29 days in an open cage partitioned by pens. One group was fed with a complete vegetable feed while the other group was fed with a animal raw material compound feed. There were inspected the changes in water consumption of the bird and in the water content in the floor surface every week after the start of the test. The detail for the test items is shown below.

Test setup: the water content in the floor surface was measured as a criterion to evaluate the extent of occurrence of loose passage. In each group, the same kind of a rice hull was used as the surface material for the floor and the same amount of it was weighted and spread on the floor.

Test place: first pen chicken house (open chicken house) located in Research Laboratory, Itochu Feed Mills Co., Ltd., No. 919, Aoki, Kuroiso-shi, Tochigi-ken, Japan

Bleeding area of 180 × 160 cm

Test chicken: Cobb species broiler chickens of 21 days old at the start of the test, each group consisting of 18 chickens (9 male and 9 female chickens) × 2 pens.    The average weight body was adjusted to the same level in each group.

Feed: Control group -animal raw material compound feed
        Test group -complete vegetable feed
Both the feeds were ones meeting the requirement for the following ingredients.

Table 1

| Calculated Values | Control Group | Test Group |
|---|---|---|
| ME | 3270Kcal/kg | 3270Kcal/kg |
| CP | 18.1% | 17.9% |
| Met | 0.43% | 0.41% |
| Met+Cys | 0.75% | 0.75% |
| Lys | 1.04% | 1.04% |
| Arg | 1.18% | 1.29% |
| Thr | 0.68% | 0.71% |
| Gly | 1.03% | 0.78% |
| Ser | 0.80% | 0.89% |

The test results are shown in tables 2 and 3 below.

Table 2

| Amount of water consumption (ml/bird/day) | | |
|---|---|---|
| | Control Group | Test Group |
| 1st Week after The Start of the Test | 246.3±19.9 | 287.0±21.4 |
| 2nd week after The Start of the Test | 348.5±56.8 | 468.3±49.7 |
| 3rd Week after The Start of the Test | 342.7±28.9 | 407.1±28.1 |
| 4th Week after The Start of the Test | 448.1±11.9 | 478.8±5.3 |
| Average | 346.4±29.4 | 410.3±26.1 |

Table 3

| Water content in the floor surface (%) | | |
|---|---|---|
| | Control Group | Test Group |
| 2nd Week after The Start of the Test | 36.2±9.1 | 58.4±8.0 |
| 4th Week after The Start of the Test | 46.0±12.3 | 62.6±4.8 |
| Average | 41.1±10.7 | 60.5±6.4 |

Water consumption in the test group during the test period is always higher than that in the control group. The average value in the control group was 346.4 ml while that in the test group was 410.3 ml, thus the average value in the test group is about 60 ml/bird/day higher than that in the control group.
Water content in the floor surface in the test group during the test period was always higher than that in the control group like the test result regarding water consumption. The average value in the control group was 41.1 % while that in the test group was 60.5 %, thus the average value in the test group is about 20 % higher than that in the control group.

It was confirmed from the results of this test that by feeding a complete vegetable feed to the broiler chicken, both the water consumption and the water content in the floor surface are increased, thus the occurrence of loose passage is increased.

Example 1

Test method: One hundred and twenty Cobb species broiler chickens of 21 days old were divided into three groups, each consisting of 20 Male and 20 female chickens (40 birds in the total) and reared for 25 days in an open cage partitioned by pens. Test group 1 was fed with a complete vegetable feed, test group 2 was fed with a 0.2 % by weight glycine added-complete vegetable feed and control group was fed with an animal raw material compound feed. There was inspected the change in water content in the floor surface during the test period. The detail of the test items is shown below.

Test setup: the water content in the floor surface was measured as a criterion to evaluate the extent of occurrence of loose passage. In each group, the same kind of a rice hull was used as the surface material for the floor and the same amount of it was weighted and then spread on the floor. Also, there was no repetition in this test. In order to confirm the influence of the test by the place, the water content in the floor surface in each group was measured at 15th day after the start of the test, and thereafter all of the rice hulls were replaced by fresh ones and the place of the group was changed.

Test place: first pen chicken house (open chicken house) located in Research Laboratory, Itochu Feed Mills Co., Ltd., No. 919 Aoki, Kuroiso-shi, Tochigi-ken, Japan

Bleeding area of 360 × 160 cm

Test chicken: 120 Cobb species male and female broiler chickens of 21 days old at the start of the test were divided into 3 groups, each group consisting of 40 chickens (20 chickens each). The average weight body was adjusted to the same level in each group.

Feed: control group - animal raw material compound feed
test group 1-complete vegetable feed
test group 2-0.2 % by weight of glycine added-feed of test group 1

Each of the feeds was one meeting the requirement for the following ingredients.

Table 4

| Calculated Values | Control Group | Test Group 1 | Test Group 2 |
|---|---|---|---|
| ME | 3270Kcal/kg | 3270Kcal/kg | 3270Kcal/kg |
| CP | 18.1% | 17.9% | 17.9% |
| Met | 0.41% | 0.41% | 0.41% |
| Lys | 1.04% | 1.04% | 1.04% |
| Gly | 1.03% | 0.78% | 0.98% |

Test results are shown in tables 5 and 6 below.

Table 5

| Water content in the floor surface (%) measured at 15th day after the start of the test | | | |
|---|---|---|---|
| | Conventional Example 2 | Comparative Example 2 | Example 1 Example 1 |
| | Control Group | Test Group 1 | Test Group 2 |
| Average | 42.8±0.2 | 62.6±0.2 | 44.1±0.9 |

Table 6

| Water content in the floor surface (%) measured at 11th day after the place change | | | |
|---|---|---|---|
| | Conventional Example 2 | Comparative Example 2 | Example 1 |
| | Control Group | Test Group 1 | Test Group 2 |
| Average | 49.6±2.3 | 58.1±1.5 | 49.4±2.3 |

As is seen from the results measured at 15th day after the start of the test, the water content in the floor surface in control group, test group 1 and test group 2 were 42.8 %, 62.6 %, 44.1 %, respectively. Thus, the water content in the floor surface in test group 1 was about 20 % higher than that in control group while the water content in the floor surface in test group 2 was equal to that in control group.

As is seen from the results measured at 11th day after the place change, the water content in the floor surface in control group, test group 1 and test group 2 were 49.6 %, 58.1 %, 49.4 %, respectively. Thus, the water content in the floor surface in test group 1 was about 10 % higher than that in control group while the water content in the floor surface in test group 2 was equal to that in control group.

These were the same as the results measured at 15th day after the start of the test.

Example 2

Test method: Thirty six Cobb species female broiler chickens of 28 days old were divided into 2 groups, each consisting of 18 chickens and reared for 22 days in an open cage partitioned by pens. Control group was fed with a complete vegetable feed while test group was fed with 0.05 % by weight of glycine further added-complete vegetable feed.

There was inspected the change in the water content in the floor surface in the duration of the test. The detail of the test items is shown below.

Test setup: the water content in the floor surface was measured as a criterion for evaluating the extent of occurrence of loose passage. In each group, the same kind of a rice hull was used as the surface material for the floor and the same amount of it was weighted and then spread on the floor.

Test place: first pen chicken house (open chicken house) located in Research Laboratory, Itochu Feed Mills Co., Ltd., No. 919 Aoki, Kuroiso-shi, Tochigi-ken, Japan

Bleeding area of 180 × 160 cm

Test chicken: 36 Cobb species female broiler chickens of 28 days old at the start of the test were divided into 2 groups, each consisting of 18 chickens. The average weight body was adjusted to the same level in each group.

Feed: control group-complete vegetable feed

   test group -0.05 % by weight of glycine further added-complete vegetable feed

Both the feeds were ones meeting the requirement for the following ingredients.

Table 7

| Calculated Values | Control Group | Test Group 1 |
|---|---|---|
| ME | 3220Kcal/kg | 3220Kcal/kg |
| CP | 18.1% | 18.1% |
| Met | 0.43% | 0.43% |
| Lys | 1.02% | 1.02% |
| Gly | 0.76% | 0.81% |

The test results are shown in table 8 below.

Table 8

| Water content in the floor surface (%) measured at 22nd day after the start of the test | | |
|---|---|---|
| | Conventional Example 3 | Example 2 |
| | Control Group | Test Group |
| Average | 52.0 ±4. 8 | 42.7±5.4 |

The water content in the floor surface in control group during the test period was 52.0 % while that in test group was 42.7 %. Thus, the water content in the floor surface in test group 1 is about 10 % lower than that in control group.

It was confirmed from the above results that the feeding of a complete vegetable feed to the broiler chicken causes the increases in the water content in the floor surface and the occurrence of broiler's loose passage. And, this suggests that by adding the prescribed amount of glycine to the complete vegetable feed the water content in the floor surface is lowered up to the same level as attained when an animal raw material feed was fed to the broiler chicken thereby the occurrence of broiler's loose passage may be suppressed.

Effect of the Invention

According to the present invention, glycine-enriched vegetable compound feed is fed to a broiler chicken thereby causing an effect to suppress or prevent the occurrence of loose passage as encountered when a complete vegetable feed (not enriched by glycine) was fed to the broiler chicken.

**Claims**

1. A glycine-enriched vegetable compound feed for a broider chicken which comprises incorporated glycine into a vegetable compound feed in the range of 0.05-0.3 % by weight based on the feed.

2. A feed additive which comprises glycine as the main ingredient for preparing the feed for a broider chicken as claimed in claim 1.

3. A method for feeding a broider chicken which comprises feeding the broider chicken with the glycine-enriched vegetable compound feed as claimed in claim 1 thereby causing an effect to suppress or prevent the occurrence of loose passage.

European Patent Office

## EUROPEAN SEARCH REPORT

Application Number

EP 02 01 6807

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CHAIYAPOOM BUNCHASAK ET AL: "Effect of Supplementing Nonessential Amino Acids on Growth Performance and Fat Accumulation in Broiler Chicks " JAPANESE POULTRY SCIENCE, vol. 35, no. 3, pages 182-188, XP001126981 * the whole document * | 1,2 | A23K1/18 A23K1/16 |
| X | DATABASE WPI Section Ch, Week 200230 Derwent Publications Ltd., London, GB; Class D13, AN 2002-248223 XP002225063 & JP 2002 027920 A (ITOCHU SHIRYO KK), 29 January 2002 (2002-01-29) * abstract * | 1,2 | |
| X | PATENT ABSTRACTS OF JAPAN vol. 014, no. 543 (C-0783), 30 November 1990 (1990-11-30) & JP 02 231041 A (ITOCHU SHIRYO KK), 13 September 1990 (1990-09-13) * abstract * | 1,2 | TECHNICAL FIELDS SEARCHED (Int.Cl.7) A23K |
| A | DATABASE WPI Section Ch, Week 199117 Derwent Publications Ltd., London, GB; Class D13, AN 1991-121822 XP002225064 & JP 03 061452 A (URANAKA K), 18 March 1991 (1991-03-18) * abstract * | 1-3 | |

-/--

The present search report has been drawn up for all claims

| Place of search | Date of completion of the search | Examiner |
|---|---|---|
| THE HAGUE | 18 December 2002 | Grittern, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

European Patent Office

**Application Number**

EP 02 01 6807

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE WPI<br>Section Ch, Week 197942<br>Derwent Publications Ltd., London, GB;<br>Class C03, AN 1979-76599B<br>XP002225065<br>& SU 643 497 A (AS KIRG INORG PHYS),<br>25 January 1979 (1979-01-25)<br>* abstract *<br>--- | 1,2 | |
| L | JP 2002 233315 A (ITOCHU)<br>20 August 2002 (2002-08-20)<br>* the whole document *<br>----- | 1-3 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 18 December 2002 | Grittern, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 384 410 A1**

## ANNEX TO THE EUROPEAN SEARCH REPORT
## ON EUROPEAN PATENT APPLICATION NO.

EP 02 01 6807

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2002

| Patent document cited in search report | | | Publication date | Patent family member(s) | | Publication date |
|---|---|---|---|---|---|---|
| JP | 2002027920 | A | 29-01-2002 | NONE | | |
| JP | 02231041 | A | 13-09-1990 | JP | 1756475 C | 23-04-1993 |
| | | | | JP | 4041576 B | 08-07-1992 |
| JP | 3061452 | A | 18-03-1991 | NONE | | |
| SU | 643497 | A | 25-01-1979 | SU | 643497 A1 | 25-01-1979 |
| JP | 2002233315 | A | 20-08-2002 | NONE | | |

EPO FORM P0459

For more details about this annex : see Official Journal of the European Patent Office, No. 12/82

10